Europäisches Patentamt

European Patent Office

Office européen des brevets

(11) Publication number: 0 398 400
A2

# EUROPEAN PATENT APPLICATION

(21) Application number: 90200871.3

(22) Date of filing: 10.04.90

(51) Int. Cl.⁵: B60J 3/02

(30) Priority: 19.05.89 IT 6737389

(43) Date of publication of application:
22.11.90 Bulletin 90/47

(84) Designated Contracting States:
BE DE ES FR GB SE

(71) Applicant: SIMAPLAST S.r.l.
Statale Saluzzo, Km.1,400
I-10041 Carignano (Torino)(IT)

(72) Inventor: Massucco, Bartolomeo
Via Salotto 14

I-10041 Garignano (Turin)(IT)
Inventor: Massucco, Giuseppe
P.ta S.Giacomo 6
I-10041 Garignano (Turin)(IT)
Inventor: Massucco, Gian Carlo
Via IV Novembre 4
I-10041 Garignano (Turin)(IT)

(74) Representative: de Blasio, Francesco,
Dipl.-Ing.
Cabinet SIMONI DE BLASIO Via XX
Settembre, 62
I-10121 Torino(IT)

(54) **Improved support means for sun visors on motor vehicles in general.**

(57) Improvement to the support means of light protection shields, commonly called sun visors, for motor vehicles in general, comprising a shield borne by a revolving pin, one part of which, fixed to the edge of each visor, is provided with a double tapered end coupled to a corresponding seat in the relative fixed support by means of moderate elastic deformation of the material constituting the support; the part of said supporting pin cooperating with a lamellar spring having a "U"-shaped profile, mounted astride of the framework of the visor and of the pin; the part of the pin crossing the "U"-shaped spring being terminally provided with spiked blocking means which prevents the pin from slipping out of the rotation seat.

FIG.3

EP 0 398 400 A2

The use of sun visors mounted above the windscreen and/or the rear windows of motor vehicles is known. It is likewise known that the front visors have to carry out complex movements, with freedom in two positions, i.e. to be lowered so as to offer protection from direct, frontal light and for further transverse movements so as to intercept light if said light is directed towards the one or the other side of the vehicle.

The functional requisites of the front sun visors necessitate a particular structure of the attachment means in the use position. Said means presently comprise, for each visor, a support fixed to the inside of the body above the windscreen; an elbow bent pin having a coupled part, revolving with moderate friction in a corresponding seat in said fixed support, with its protruding end, upstream of said support, blocked by various means. The other end of the pin, provided with a terminal, radial tooth, is inserted into a seat in the framework of the visor, and is provided with parallel faceting astride of which a lamellar spring with mutually coupled ends is mounted. Said spring, closed as a ring, inserted into the framework of the visor, cooperates with the support pin, determining the angular jerking motion of said pin, corresponding to the two limit positions of the visor, i.e. lowered or raised.

The part of the pin that is coupled to the fixed support allows for transverse movements of the visor when said visor is lowered. The essential organs necessary for good functioning and long life of the sun visors are therefore, for each visor, constituted by the part of the pin coupled to the fixed support, the spring mounted astride of the faceted part of the pin and by the means which prevent slipping out of the seats of rotation.

The improvement according to the invention refers to the above-mentioned organs, and in particular to the means for coupling the part of the pin to the seat of the fixed support; to the means for longitudinally blocking the part of the pin that supports the visor and to the shape and placing of the lamellar spring that cooperates with the faceted pin.

A primary purpose of the improvement is to provide the above-mentioned organs structured in such a way as to guarantee reliability in function and long life.

Another purpose of the invention is to contain the production costs of said particulars at the same time improving functionality. In order to satisfy said purposes, one characteristic of the improvement derives from the fact that the seat of the fixed support of the pin of each visor and the corresponding end of the pin are coupled, revolving, by forced coupling and have a double tapered profile. The support and the pin are manufactured in any suitable material, such as for example: the support and the seat of the pin in elastically and moderately deformable plastic material, such as nylon; the pin in metallic material or in a suitable plastic material. The coupling between the pin and the corresponding support can be effected by the forced coupling of the double tapered pin to the corresponding seat, thereby achieving a coupling between the two parts which, although being mutually revolving with moderate friction, is no longer spontaneously dividable even without other, supplementary blocking organs.

A further characteristic of the improvement derives from the fact that the part of the pin which cooperates with the "U" spring, coupled to the seat in the framework of the visor is provided with a spiked terminal blocking device, placed in the shell of the pin.

Another characteristic of the improvement derives from the fact that the spring determines, by jerking motion, the two angular, stable positions that can be given to the visor as well as a plurality of intermediate angular positions - said lamellar spring, in steel, being mounted astride of said pin, being "U"-shaped, with open branches, and being engaged in corresponding seats of the framework of the visor or of an applied support attached to the top of said framework.

Detailed characteristics of the improvement are described below with reference to the drawings, at a variable scale, attached to illustrate the invention, in which:

- Figure 1 represents a sun visor, complete with its support for attachment in use;

- Figure 2 is a view in longitudinal section of the fixed support according to line II-II of Figure 1;

- Figure 3 is an axonometric and exploded view illustrating the organs according to the improvement and a part in section of a visor;

- Figure 4 is a particular of the support pin of the visor;

- Figure 5, similar to Figure 2, illustrates the preferred inclinations of the double tapered shell of the pin and the corresponding seat placed in the fixed support;

- Figure 6, with A, B, C, D, illustrates the various transverse sections of the pin according to the corresponding lines in Figure 5;

- Figure 7 is an axonometric view of a support applied to the top of a visor;

- Figure 8, similar to Figure 3, illustrates a variant of the terminal blocking means of the pin with respect to the visor and the seat of same.

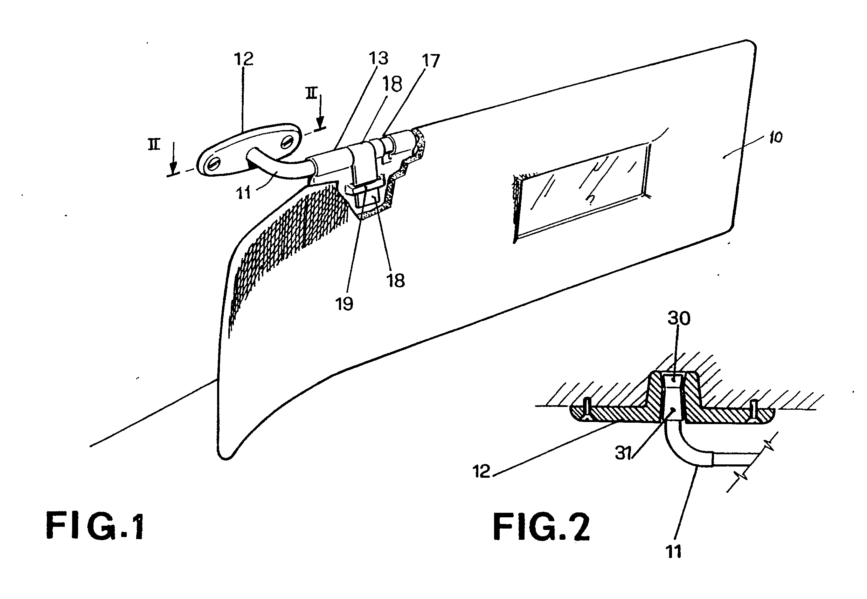

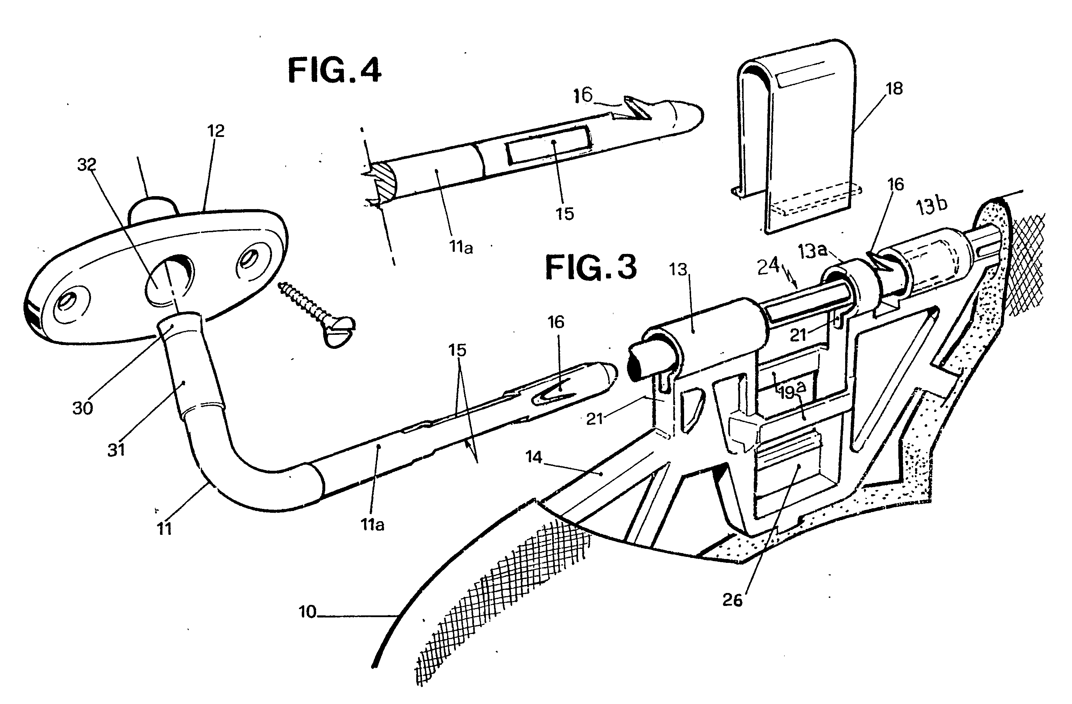

In the drawings, in Figures 1, 4, 8, a sun visor is indicated by 10. Said visor can be any other shape different from that illustrated, and is provided with a revolving pin 11, elbow bent, one end of which, Figure 2, is double tapered 30, 31, coupled to a corresponding seat of a support 12, which can be fixed to the top of the windscreen, and a second part 11a, Figures 3, 4, mounted revolving in the coaxial collars 13, 13a, 13b, of the framework 14. The support 13 is part of the framework 14, moulded in plastic material.

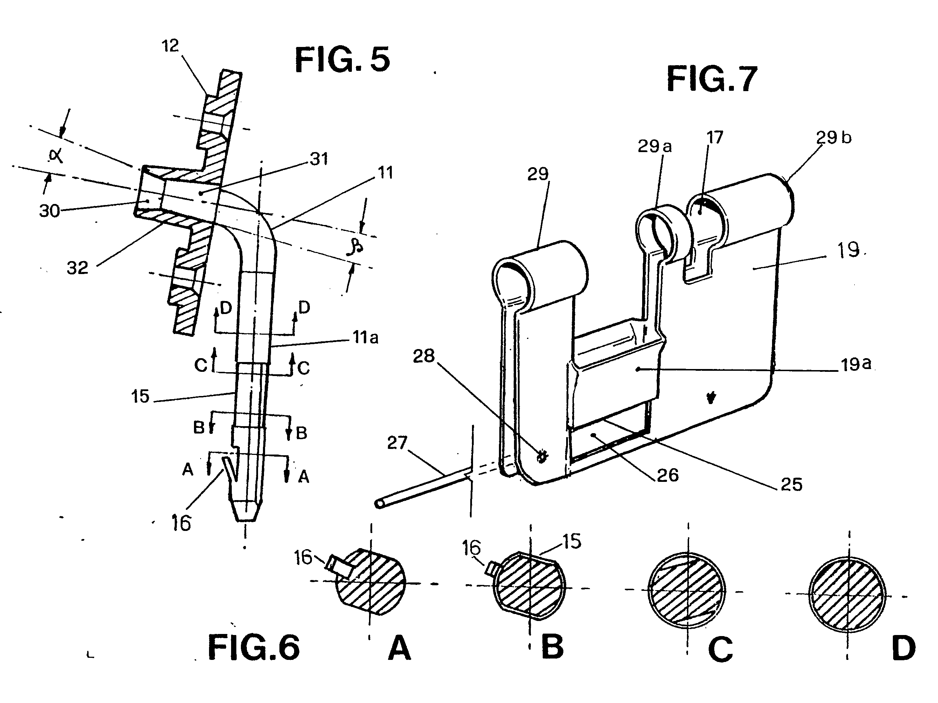

According to the improvement, as illustrated in detail in Figures 4 and 5, the double tapered end of the pin 11 receives the parts 30, 31; the angle -$\alpha$-of the tapering of the terminal part 30 is greater than the angle -$\beta$- of the tapering of the part 31; furthermore, the end of the part 11a, of the same pin moulded in plastic material, is provided with spiked terminal blocking means 16, placed in the pin. When the pin is coupled to the support seat 19, the spike 16 deforms elastically and is released into the space 17 to be found between the parts 13a, 13b, Figure 3. In these conditions the pin 11 remains longitudinally coupled with respect to the support 19.

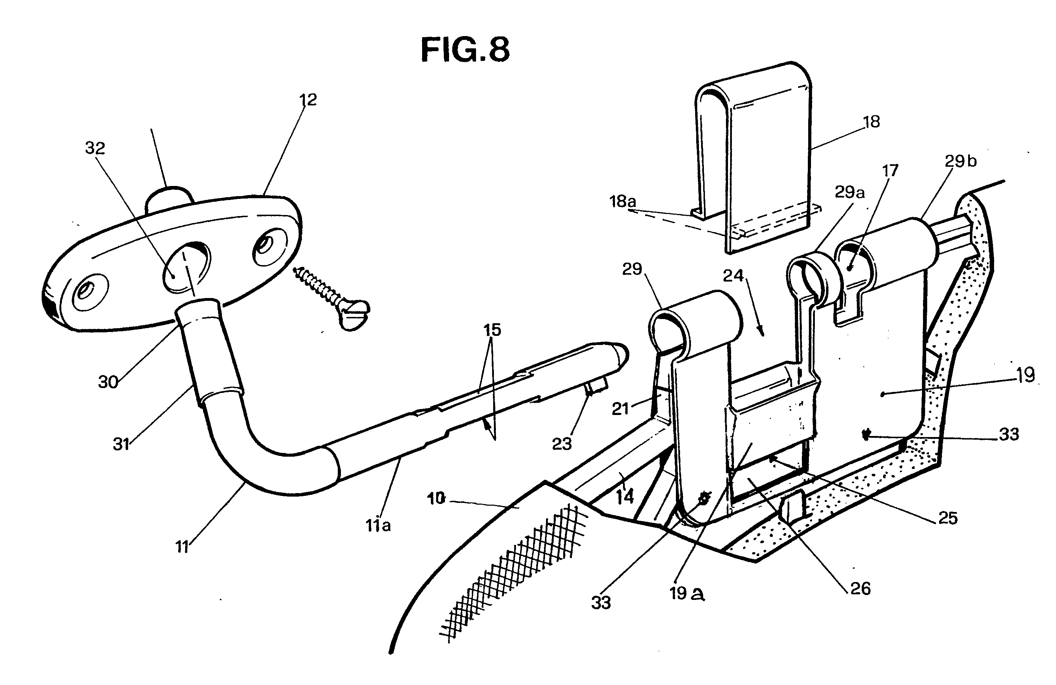

According to a structural variant, Figure 7, the support 19 is an appliance and is preferably moulded in metal sheet. It is mounted to the top of the framework 14, with the interposition of the width 21 of the framework of the visor, Figure 8, and of a metal pin 27, Figure 7. The sides of the support 19 are mutually blocked into place by fixing means, such as points of welding 33, Figures 7 and 8.

As shown in Figures 1, 4 and 8, the lamellar spring 18 is mounted astride of the part 11a of the pin 11, in correspondence with the space 24 of the support of the pin. The support, whether it is an appliance as indicated by 19 in Figures 7 and 8 or whether it is all of one piece with the framework 14, Figure 3, is provided with transverse side portions 19a between which the ends of the branches of the spring 18 are inserted. One, or both of the ends are provided with a terminal portion 18a bent to 90°, which, when the spring is mounted in place, protrudes into the corresponding window 26, and hooks onto the lower edge 25 of one or both of the transverse portions 19a, blocking the spring into place.

As shown in Figure 8, in place of the spiked blocking means 16, the end of the pin is provided with a radial tooth 23 which engages into the space 17 between the collars 29a and 29b, and acts as a longitudinal blocking device.

The characteristics of the improvement according to be invention are made clear by the above description. Said improvement, as well as achieving a particular coupling between the double tapered end 30, 31 of the pin and the corresponding seat of the support 12 and simplifying the shape of the spring 18, which up till now has been very complex, provides longitudinal blocking means for the pin, shaped as a spike 16, which guarantees stability, thereby satisfying the purposes set out in the introduction, i.e. structural simplicity, economic manufacture of the parts of the visor support and functional reliability as a whole.

## Claims

1. Improvement to the support means of sun visors in motor vehicles in general, characterised by the fact that it comprises a pin (11, 11a) the end of which (30, 31) is double tapered like the corresponding seat (32) of a corresponding support (12). A lamellar spring (18) cooperates with a faceted part (15) of said pin, said spring being "U"-shaped, while a short portion (18a) of the end of at least one of its branches is bent towards the outside of the "U"-shaped profile and protrudes into one of the two lateral windows (26) opposite the support, said windows being made up of transverse portions (19a) situated in correspondence with a groove (26) in the support. The branches of the spring (18) are mounted between the portions (19a); further characterised by the fact that the end of the pin (11) mounted in the support of the framework (14) is provided with spiked blocking means (16) acting in a space (17) preventing the pin from slipping out.

2. Improvement according to Claim 1, characterised by the fact that the double tapered end (30, 31) of the pin (11) is mounted by forced coupling into the corresponding double tapered seat (30) of the support (12), by means of moderate elastic deformation of the material constituting the support, in order to obtain coupling of the parts, revolving with friction, having no other stopping means, and not being spontaneously dividable.

3. Improvement according to Claim 1, and according to a variant of the support (19) of the visor (Figures 7, 8), characterised by the fact that said support, moulded in metal sheet, is an appliance, and is mounted to the top of the visor where it is blocked by transverse fixing means, such as points of welding (33) common to its terminal edge protruding into a cavity in the framework (34).

4. Improvement according to Claim 1 and to Claim 3, characterised by the fact that between the lower, connecting edges of the support (19) in metal sheet, a distance pin (27) is inserted.

FIG.1

FIG.2

# FIG.4

# FIG.3

EP 0 398 400 A2

**FIG. 5**

12

α

30

32

31

11

β

D    D

11a

C    C

15

B    B

A    A

16

**FIG.6**

**FIG.7**

29a    17    29b

29

28

19

19a

27

26    25

16        16    15

**A**    **B**    **C**    **D**

EP 0 398 400 A2

FIG.8